# EUROPÄISCHE PATENTSCHRIFT

(11) **EP 1 545 805 B1**
(45) Veröffentlichungstag und Bekanntmachung des Hinweises auf die Patenterteilung: **24.11.2010**
(21) Anmeldenummer: 03753591.1
(22) Anmeldetag: 01.09.2003
(51) Int. Cl.: B08B 3/04, G01N 27/28, G01N 27/38

(54) **SPÜLVORRICHTUNG FÜR EINEN SENSOR**
RINSING DEVICE FOR A SENSOR
DISPOSITIF DE LAVAGE POUR CAPTEUR

(30) Priorität: 09.09.2002 DE 10241834
(43) Veröffentlichungstag der Anmeldung: 29.06.2005
(73) Patentinhaber: Mettler-Toledo AG, 8606 Greifensee (CH)
(72) Erfinder: CADERAS, Daniel, CH-8235 Lohn (CH)
(86) Internationale Anmeldenummer: PCT/EP2003/050603
(87) Internationale Veröffentlichungsnummer: WO 2004/024353

(56) Entgegenhaltungen:
- EP-A- 0 372 121
- EP-A- 0 391 838
- CH-A- 673 783
- PATENT ABSTRACTS OF JAPAN vol. 1998, no. 05, 30. April 1998 (1998-04-30) -& JP 10 019835 A (DKK CORP), 23. Januar 1998 (1998-01-23)

## Beschreibung

### Technisches Gebiet

Die Erfindung betrifft eine Spülvorrichtung für einen Sensor gemäss Anspruch 1.

### Stand der Technik

Eine Spülvorrichtung der eingangs genannten Art ist beispielsweise aus der EP 0 106 858 B1 bekannt. Die dort beschriebene Spülvorrichtung weist eine zylinderartige Spülkammer auf, die an einem vorderen Kammerteil an einen Messgutbehälter anschliessbar ist und die zur Aufnahme eines koaxial zur Längsachse der Kammer verschiebbaren Tauchrohres und darin enthaltenem Sensor ausgebildet ist. Das Tauchrohr ist zwischen einer eingefahrenen Ruhestellung und einer ausgefahrenen Arbeitsstellung axial verschiebbar, um das Sensorvorderteil in Kontakt mit dem im Messgutbehälter befindlichen Messmedium zu bringen. Die Spülkammer enthält einen durch zwei Ringnuten begrenzten Spülbereich, dessen Umfangswand mit einem Zulauf sowie einem Ablauf für Spülmedium ausgestattet ist. In der eingefahrenen Ruhestellung befindet sich der Sensor im Spülbereich und kann dort wunschgemäss mit Spülmedium behandelt werden.

Die in der EP 0 106 858 B1 beschriebene Spülvorrichtung bildet einen Teil einer Wechselarmatur, welche im gezeigten Beispiel horizontal eingebaut ist, d.h. die Längsachse der Spülkammer ist im Wesentlichen waagrecht ausgerichtet. Um ein möglichst vollständiges Abfliessen des Spülmediums zu gewährleisten, ist die Wechselarmatur am Messgutbehälter derart angeschlossen, dass der Ablauf nach unten gerichtet ist, wodurch die Mündung des Ablaufs an unterster Stelle des Spülbereichs gelegen ist. Wird hingegen die Wechselarmatur vertikal oder auch nur annähernd vertikal mit nach unten ragendem Sensor eingebaut, kann das Spülmedium nur unvollständig abfliessen, da die unterhalb der Mündung befindlichen Anteile in der Spülkammer verbleiben. Dies ist aus verschiedenen Gründen höchst unerwünscht. Zum einen umfasst ein Spülvorgang des Sensors in aller Regel nicht nur einen einzeinen Schritt mit Zufuhr eines einzelnen Spülmediums, sondern es handelt sich dabei zumeist um eine Abfolge von Vorgängen, die beispielsweise ein Vorspülen, eine Behandlung mit Reinigungsmedium, ein Nachspülen, ein Durchblasen mit Luft oder dergleichen, und allenfalls auch eine Sensorkalibrierung mittels geeigneter Kalibrierflüssigkeiten umfasst. Bei einer solchen Abfolge sollte nach jedem Vorgang möglichst wenig Medium in der Spülkammer verbleiben. Zum anderen gilt zu bedenken, dass beim Ausfahren des Tauchrohres von der Ruhestellung in die Messstellung die zunächst im Spülbereich befindlichen Teile des Tauchrohres und des Sensors in den Messgutbehälter gelangen und dort in Kontakt mit dem Messmedium kommen. Eine Mitnahme von Restanteilen des Spülmediums kann zu einer Verunreinigung oder einer anderen Beeinträchtigung des Messmediums führen.

Ein Ansatz zur Vermeidung der obigen Probleme findet sich bei der Wechselarmatur gemäss der CH 673 783 A5, welche eine Spülvorrichtung gemäss dem Oberbegriff des Anspruchs 1 offenbart und insbesondere für eine vertikale Einbaulage vorgesehen ist. Diese weist eine aus zwei hintereinander angeordneten Spülkammem gebildete Spülvorrichtung auf. Damit lässt sich eine schleusenartige Abtrennung einzelner Teile der Vorrichtung erreichen, so dass sich das Eindringen von Spülmedium in den Messgutbehälter wie auch ein Austreten von Messmedium in äussere Teile der Wechselarmatur vermeiden lässt. Der komplexe und aufwendige Aufbau dieser Spülkammer stellt jedoch einen erheblichen Nachteil dar.

### Darstellung der Erfindung

Aufgabe der Erfindung ist es, eine verbesserte Spülvorrichtung anzugeben, um insbesondere die oben genannten Nachteile zu vermeiden.

Gelöst wird diese Aufgabe durch die im Anspruch 1 definierte Spülvorrichtung. Diese umfasst eine zylinderartige Spülkammer, die an einem vorderen Kammerteil an einen Messgutbehälter anschliessbar ist und die zur Aufnahme eines koaxial zur Längsachse der Spülkammer verschiebbaren Tauchrohres und darin enthaltenem Sensor ausgebildet ist. Die Spülkammer enthält einen durch eine vordere Ringnut und einen hinteren Abschluss begrenzten Spülbereich, dessen Umfangswand mindestens einen Zulauf sowie einen Ablauf mit einer Mündungsöffnung für Spülmedium aufweist.

Dadurch, dass die vordere Ringnut schiefwinkelig zur Längsachse der Spülkammer ausgerichtet, die Mündungsöffnung unmittelbar hinter der vordersten Stelle der vorderen Ringnut angeordnet und der Ablauf von der Mündungsöffnung ausgehend nach vorne geneigt ist, und dass zudem die Umfangswandung einen ausgehend vom hinteren Ende des Spülbereichs bis zur Mündungsöffnung kontinuierlich zunehmenden Innendurchmesser aufweist, lässt sich erreichen, dass sich die Mündungsöffnung von einer horizontalen bis zu einer vertikalen Ausrichtung der Längsachse an unterster Stelle des Spülbereichs befindet. Demzufolge ist für den ganzen erwähnten Bereich von Einbaulagen gewährleistet, dass Spülmedium im Wesentlichen vollständig aus der Spülkammer ausfliessen kann.

Vorteilhafte Ausgestaltungen der Erfindung sind in den abhängigen Ansprüchen definiert.

Grundsätzlich sind mehrere Ausgestaltungen des Ablaufes möglich. Besonders einfach lässt sich der Ablauf gemäss Anspruch 2 realisieren, wonach er als geradlinige Bohrung ausgestaltet ist, deren Bohrungsachse im Wesentlichen parallel zur Ebene der vorderen Ringnut ausgerichtet ist.

Während bei manchen Anwendungen die Achse des Zulaufs zweckmässigerweise radial ausgerichtet ist, kann es in anderen Fällen sinnvoll sein, wie in Anspruch 3 definiert die Achse des Zulaufs mit einer tangentialen Komponente auszustatten, um eine zirkulatorische Durchströmung der Spülkammer zu erreichen. Ebenso kann es zweckmässig sein, gemäss Anspruch 4 eine in Einlassrichtung nach vorne geneigte Achse des Zulaufs vorzusehen. Insbesondere kann die Spülvorrichtung gemäss Anspruch 5 mit einer Mehrzahl von unterschiedlich ausgerichteten Zuläufen ausgestattet sein. Beispielsweise kann die Spülvorrichtung einen ersten Zulauf mit radialer Ausrichtung sowie einen zweiten Zulauf mit einer tangentialen Richtungskomponente aufweisen. Dabei dient der erste Zulauf vornehmlich zum Bespülen des Sensors und der zweite Zulauf vornehmlich zum Umspülen des im Spülbereich befindlichen Tauchrohrmantels.

Grundsätzlich gibt es verschiedene Ausgestaltungen für den hinteren Abschluss des Spülbereichs. Beispielsweise könnte dieser als mediumdichter, beweglicher Federbalg ausgebildet sein, an welchem das Tauchrohr starr angeordnet ist. Besonders vorteilhaft ist die Ausgestaltung nach Anspruch 6, wonach der hintere Abschluss des Spülbereichs eine hintere Ringnut für eine entsprechende Ringdichtung beinhaltet.

### Kurze Beschreibung der Zeichnungen

Ausführungsbeispiele der Erfindung werden nachfolgend anhand der Zeichnungen näher beschrieben, dabei zeigen:
- Figur 1: eine Wechselarmatur mit Tauchrohr und darin enthaltenem Sensor, in eingefahrener Ruhestellung, mit einer Spülvorrichtung, im Längsschnitt;
- Figur 2: die Wechselarmatur der Figur 1, in ausgefahrener Messstellung, im Längsschnitt;
- Figur 3: die Spülvorrichtung der Figur 1, bei horizontaler Einbaulage, im Längs- schnitt;
- Figur 4: einen Ausschnitt der Spülvorrichtung der Figur 3, in vergrösserter Darstel- lung;
- Figur 5: eine weitere Spülvorrichtung, bei vertikaler Einbaulage, im Längsschnitt;
- Figur 6: die Spülvorrichtung der Figur 5, in Draufsicht und teilweise geschnitten.

### Wege zur Ausführung der Erfindung

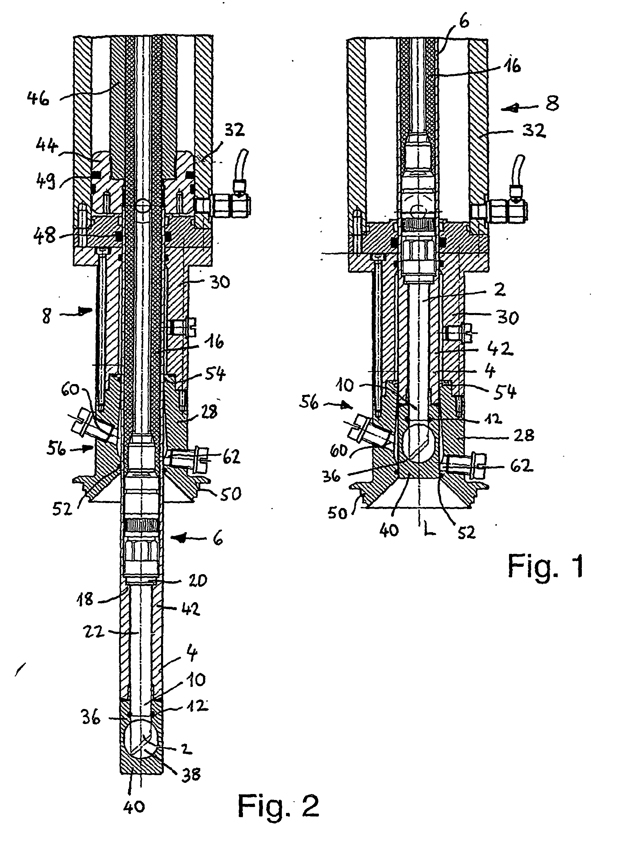

Die in den Figuren 1 und 2 dargestellte Wechselarmatur enthält einen Sensor 2, der herausnehmbar im Vorderteil 4 eines Tauchrohres 6 angeordnet ist. Das Tauchrohr 6 und damit der Sensor 2 sind bezüglich eines Gehäuses 8 zwischen einer eingefahrenen Ruhestellung und einer ausgefahrenen Arbeitsstellung axial verschiebbar. In der in Figur 1 dargestellten Ruhestellung befinden sich das Tauchrohr 6 und der Sensor 2 innerhalb des Gehäuses 8; in der in Figur 2 dargestellten Arbeitsstellung ist das Tauchrohr 6 mit dem Sensor 2 ausgefahren und taucht in ein nicht näher dargestelltes Reaktionsgefäss ein, um Messwerte in einem darin befindlichen Medium zu ermitteln.

Ein vorderer Mantelabschnitt 10 des Sensors 2 und ein im Vorderteil 4 des Tauchrohres 6 eingelassener O-Ring 12 bilden einen mediumdichten Abschluss des Tauchrohres 6. Des Weiteren enthält das Tauchrohr 6 einen rohrartigen Einsatz 16, mittels welchem der Sensor 2 in eingesetzter Lage gegen einen vorderen Anschlag 18 des Tauchrohres 6 vorgeschoben ist. Im gezeigten Beispiel ist dieser vordere Anschlag 18 durch eine stufenartige Verengung im Inneren des Tauchrohres 6 gebildet, gegen welchen der Sensor 2 mit einem Vorsprung 20 des Sensorschaftes 22 ansteht.

Das Gehäuse 8 ist aus mehreren rohrartigen Bauteilen, nämlich einem vorderen Kammerteil 28, einem mittleren Kammerteil 30, einem zylinderförmigen Gehäuseteil 32 sowie einem nicht dargestellten hinteren Gehäuseteil, zusammengesetzt. Die einzelnen Kammerteile sind durch Verbindungsflansche und Befestigungsschrauben miteinander verbunden.

Das Tauchrohr 6 weist am vorderen Ende einen Käfig 36 auf, der mit mindestens einer seitlichen Durchtrittsöffnung 38 versehen ist, um in ausgefahrener Messstellung den Zutritt von Messmedium zum Sensor 2 zu gewährleisten. Ausserdem weist der Käfig 36 einen Boden 40 auf, der einen vorderen Abschluss des Tauchrohres bildet. Der Käfig 36 ist mit einem mittleren Tauchrohrteil 42 verschweisst, in dessen Innenwandung der besagte vordere Anschlag 18 für den Sensor 2 ausgebildet ist. An der dem Käfig 36 gegenüberliegenden Seite ist das mittlere Tauchrohrteil 42 mit einem Kolben 44 verbunden, der im zylindrischen Gehäuseteil 32 längsverschieblich gelagert ist. An der dem mittleren Tauchrohrteil 42 gegenüberliegenden Seite des Kolbens 44 ist ein hinteres Tauchrohrteil 46 angeordnet. Zwischen zusammenwirkenden Teilen des Gehäuses 8 und des Tauchrohres 6 ist eine Mehrzahl von Gleitlagern 48 und Kolbendichtungen 49 vorgesehen.

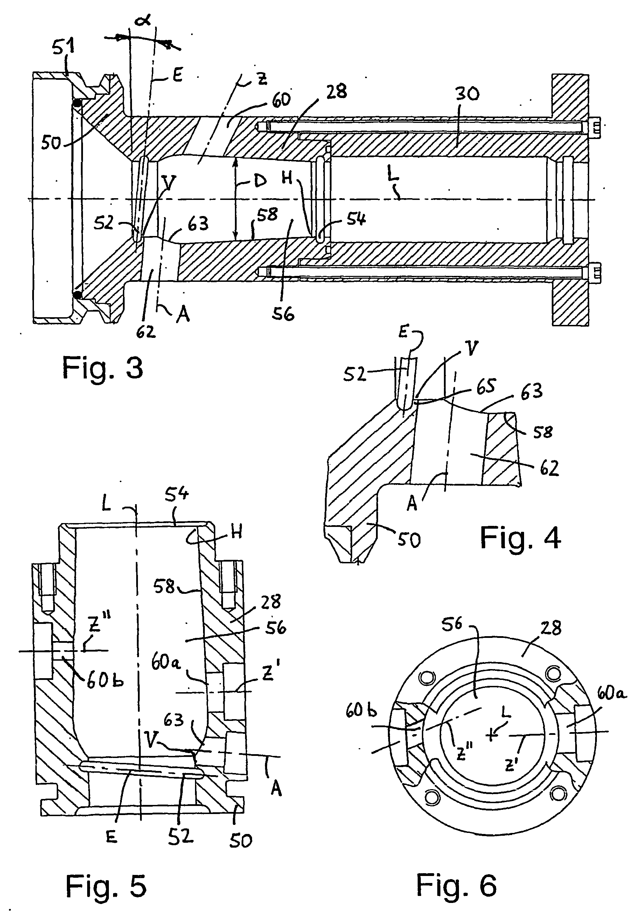

Wie insbesondere aus der Figur 3 hervorgeht, ist das vordere Kammerteil 28 mit einem Anschlussflansch 50 ausgestattet, mittels welchem die Wechselarmatur an einen Gegenflansch 51 eines Reaktionsgefässes anschliessbar ist. Da das vordere Kammerteil 28 als Bauteil des modular aufgebauten Gehäuses 8 ausgestaltet ist, lässt sich die Wechselarmatur an Reaktionsgefässe unterschiedlicher Anschlussmasse anschliessen, indem ein vorderes Kammerteil 28 mit entsprechend bemessenem Anschlussflansch 50 verwendet wird.

Das vordere, zylinderartige Kammerteil 28 ist als Spülkammer ausgestaltet, welche einen Teil einer Spülvorrichtung für den Sensor 2 bildet. Die Spülkammer 28 weist einen durch eine vordere Ringnut 52 und eine hintere Ringnut 54 begrenzten Spülbereich 56 auf, dessen Umfangswand 58 einen Zulauf 60 sowie einen Ablauf 62 für Spülmedium aufweist. Zweckmässigerweise ist der Zulauf 60 und der Ablauf 62 mit einem Innengewindeabschnitt versehen, in welchen ein entsprechendes Anschlussteil oder aber, wie in den Figuren 1 und 2 dargestellt, ein Verschlussstopfen einschraubbar ist. Letzteres ist beispielsweise für die Vornahme von Dichtigkeitsprüfungen nützlich, In jeder Ringnut 52, 54 befindet sich ein entsprechender Dichtungsring, welcher mit der Aussenwandung des Tauchrohres 6 einen mediumdichten Abschluss des Spülbereichs 56 bildet. Wie aus der Figur 1 ersichtlich, befindet sich in eingefahrener Ruhestellung des Tauchrohres 6, welche auch einer Spülstellung für den Sensor 2 entspricht, der Käfig 36 innerhalb des Spülbereichs 56. Somit kann durch den Zulauf 60 zugeführtes Spülmedium durch die seitliche Durchtrittsöffnung 38 des Käfigs 36 zum darin befindlichen Sensor 2 gelangen. Ein Austritt von Spülmedium in die Wechselarmatur wird dabei durch den zwischen dem Mantel 10 des Sensors 2 und der Innenwandung des Tauchrohres 6 angeordneten O-Ring 12 verhindert. In der ausgefahrenen Messstellung gemäss der Figur 2 befindet sich im vorderen Kammerteil 28 und insbesondere zwischen der vorderen und hinteren Ringnut 52 und 54 ein öffnungsloser Teil des Tauchrohres 6. Demnach ist in ausgefahrener Messstellung der Spülbereich 56 auf den zwischen den beiden Ringnuten 52 und 54 befindlichen Zwischenraum zwischen der Aussenwandung des Tauchrohres 6 und der Umfangswand 58 beschränkt.

Die funktionswesentliche Ausgestaltung der Spülvorrichtung wird nun näher anhand der Figuren 3 und 4 erläutert. Wie insbesondere aus der Figur 3 hervorgeht, ist die vordere Ringnut 52 schiefwinkelig zur Längsachse L der Spülkammer 28 ausgerichtet. Beispielsweise beträgt der Winkel α zwischen der Ringnut-Ebene E und der Normal-Ebene zur Längsachse L ungefähr 5°. Aufgrund dieser schiefwinkeligen Anordnung weist die Umfangswand 58 des Spülbereichs 56 eine vorderste Stelle V auf. Die Mündungsöffnung 63 ist unmittelbar hinter der vordersten Stelle V angeordnet, wobei mit "unmittelbar" gemeint ist, dass der vorderste Teil der Mündungsöffnung 63 unmittelbar an die vordere Ringnut 52 angrenzt oder - wie in der Figur 4 ersichtlich - durch einen im Vergleich zu den übrigen Abmessungen der Spülkammer 28 sehr dünnen Wandbereich 65 getrennt ist. Der Ablauf 62 ist im gezeigten Beispiel als geradlinige Bohrung ausgestaltet, deren Bohrungsachse A im Wesentlichen parallel zur Ebene E der vorderen Ringnut 52 ausgerichtet ist. Des Weiteren weist die Umfangswand 58 einen Innendurchmesser D auf, welcher ausgehend vom hinteren Ende H des Spülbereichs 58, das durch die hintere Ringnut 54 definiert ist, bis zur Mündungsöffnung 63 kontinuierlich zunimmt.

In horizontaler Einbaulage der Wechselarmatur (Figur 3), d.h. bei waagrechter Ausrichtung der Längsachse L, bildet die sich nach vorne aufweitende Umfangswand 58 einen Abflussweg für Spülmedium, welches von sämtlichen Stellen der Spülkammer 28 zur Mündungsöffnung 63 geleitet wird. Wie aus der Figur 3 erkennbar, setzt dies zwingend voraus, dass in der horizontalen Einbaulage der Abfluss 62 nach unten gerichtet ist.

In vertikaler Einbaulage der Wechselarmatur (Figuren 1 und 2), d.h. bei senkrechter Ausrichtung der Längsachse L, bildet die schiefwinkelig angeordnete vordere Ringnut 52 einen Abflussweg für Spülmedium. Dabei fliesst Spülmedium von sämtlichen Stellen der Spülkammer 28 zunächst bis zur Ringnut 52 bzw. zur darin befindlichen Ringdichtung und wird danach entlang letzterer bis zur Mündungsöffnung 63 geleitet.

Aus obigem geht hervor, dass sowohl in horizontaler als auch in vertikaler Einbaulage, aber auch bei zwischen diesen beiden Ausrichtungen liegenden Einbaulagen das in der Spülkammer 28 befindliche Spülmedium zur Mündungsöffnung 63 abfliesst, welche stets eine unterste Stelle der Spülkammer bildet. Insbesondere weisen die Abflusswege keine lokalen Vertiefungen auf, in welchen sich Spülmedium ansammeln könnte.

Der Zulauf für Spülmedium kann je nach Anwendungsbereich unterschiedlich ausgestaltet sein. Insbesondere sind Lage und Neigung des Zulaufs auf die Anordnung der Durchtrittsöffnungen 38 im Käfig 36 abzustimmen, um die Spülmediumzufuhr zum Sensor 2 zu optimieren. Beispielsweise ist bei der Spülvorrichtung der Figur 3 der Zulauf 60 im vorderen Drittel des Spülbereichs 56 angeordnet und weist eine nach vorne geneigte Achse Z auf.

Die Figuren 5 und 6 zeigen eine weitere Ausgestaltung der Spülvorrichtung. Diese weist einen ersten Zulauf 60a auf, dessen Achse Z' radial und senkrecht zur Längsachse L der Spülkammer 28 steht. Ein weiter hinten angeordneter zweiter Zulauf 60b hat hingegen eine tangentiale Richtungskomponente, d.h. seine Achse Z" ist nicht direkt auf die zentrale Längsachse L der Spülkammer 28 gerichtet. Diese Ausgestaltung bewirkt, dass das Spülmedium die Spülkammer 28 schraubenartig durchströmt. Bei dieser Anordnung bewirkt der erste Zulauf 60a eine optimale Bespülung des Sensors, während der zweite Zulauf 60b eine gute Umspülung des Käfigs 36 bewirkt. Unter "Spülmedium" ist im vorliegenden Zusammenhang nicht nur eine eigentliche Spülflüssigkeit wie beispielsweise Wasser zu verstehen. Vielmehr umfasst dieser Begriff je nach Anwendungsfall auch diverse Reinigungsmedien, wie sie beispielsweise für die so genannte CIP-Reinigung (engl. "Cleaning In Place") verwendet werden. Des Weiteren kann es sich um Wasserdampf, Spülgase, oder auch Kalibrierungsflüssigkeiten handeln. Insbesondere kann am Zulauf 60, 60a, 60b und allenfalls auch am Ablauf 62 eine Vorrichtung zur Behandlung des Sensors angeschlossen sein, mit welcher eine ganze Abfolge von Reinigungs-, Spülungs- und Kalibrierungsschritten vorgenommen werden kann.

Der bereits erwähnte Winkel α zwischen der Ringnut-Ebene E und der Normal-Ebene zur Längsachse L beträgt vorzugsweise ungefähr 5°. Damit ist einerseits ein gutes Abfliessverhalten für Spülmedium gewährleistet, andererseits jedoch die Elliptizität der vorderen Ringnut 52 genügend gering, dass in dieser ohne weiteres ein kreisrunder Dichtungsring verwendet werden kann.

### Bezugszeichenliste

- 2: Sensor
- 4: Vorderteil von 6
- 6: Tauchrohr
- 8: Gehäuse
- 10: vorderer Mantelabschnitt von 2
- 12: O-Ring
- 16: Einsatz
- 18: vorderer Anschlag von 6
- 20: Vorsprung von 22
- 22: Sensorschaft
- 28: vorderes Kammerteil von 8 (Spülkammer)
- 30: mittleres Kammerteil
- 32: zylindrisches Gehäuseteil
- 36: Käfig von 6
- 38: Durchtrittsöffnung von 36
- 40: Boden von 36
- 42: mittlerer Tauchrohrteil
- 44: Kolben
- 46: hinterer Tauchrohrteil
- 48: Gleitlager
- 49: Kolbendichtung
- 50: Anschlussflansch von 28
- 51: Gegenflansch
- 52: vordere Ringnut
- 54: hintere Ringnut
- 56: Spülbereich
- 58: Umfangswand von 56
- 60, 60a, 60b: Zulauf
- 62: Ablauf
- 63: Mündungsöffnung von 62
- 65: Wandbereich zwischen 52 und 63
- L: Längsachse
- D: Innendurchmesser
- E: Ebene von 52
- V: vorderste Stelle von 58
- H: hinteres Ende von 58
- A: Bohrungsachse von 62
- Z, Z', Z": Bohrungsachse von 60, 60a, 60b
- α: Winkel zwischen E und Normal-Ebene zu L

## Patentansprüche

1. Spülvorrichtung für einen Sensor, mit einer zylinderartigen Spülkammer (28), die an einem vorderen Kammerteil (50) an einen Messgutbehälter (51) anschliessbar ist und die zur Aufnahme eines koaxial zur Längsachse L der Spülkammer (28) verschiebbaren Tauchrohres (6) und darin enthaltenem Sensor (2) ausgebildet ist, wobei die Spülkammer (28) einen durch eine vordere Ringnut (52) und einen hinteren Abschluss (54) begrenzten Spülbereich (56) aufweist, dessen Umfangswand (58) mindestens einen Zulauf (60, 60a, 60b) sowie einen Ablauf (62) mit einer Mündungsöffnung (63) für Spülmedium aufweist und die Mündungsöffnung (63) an die vorderste Stelle (V) der Umfangswand (58) angrenzend angeordnet ist, **dadurch gekennzeichnet, dass** die vordere Ringnut (52) schiefwinkelig (α) zur Längsachse L ausgerichtet ist, dass der Ablauf (62) von der Mündungsöffnung (63) ausgehend nach vorne geneigt ist, und dass die Umfangswand (58) einen ausgehend vom hinteren Ende (H) des Spülbereichs (56) bis zur Mündungsöffnung (63) kontinuierlich zunehmenden Innendurchmesser (D) aufweist.

2. Spülvorrichtung nach Anspruch 1, **dadurch gekennzeichnet, dass** der Ablauf (62) als geradlinige Bohrung ausgestaltet ist, deren Bohrungsachse (A) im wesentlichen parallel zur Ebene (E) der vorderen Ringnut (52) ausgerichtet ist.

3. Spülvorrichtung nach Anspruch 1 oder 2, **dadurch gekennzeichnet, dass** sie einen Zulauf (60b) aufweist, dessen Achse (Z") eine Komponente in tangentialer Richtung aufweist.

4. Spülvorrichtung nach einem der Ansprüche 1 bis 3, **dadurch gekennzeichnet, dass** sie einen Zulauf (60a) aufweist, dessen Achse (Z') in Einlassrichtung nach vorne geneigt ist.

5. Spülvorrichtung nach einem der Ansprüche 1 bis 4, **dadurch gekennzeichnet, dass** sie eine Mehrzahl von unterschiedlich ausgerichteten Zuläufen (60a, 60b) aufweist.

6. Spülvorrichtung nach einem der Ansprüche 1 bis 5, **dadurch gekennzeichnet, dass** der hintere Abschluss des Spülbereichs (56) eine hintere Ringnut (54) beinhaltet.

## Claims

1. Rinsing device for a sensor, with a cylinderlike rinsing chamber (28) which has an anterior chamber part (50) connectable to a measuring material container (51) and which is configured to receive an immersion tube (6) that contains a sensor (2) and is coaxial with as well as movable along the longitudinal axis L of the rinsing chamber (28), wherein the rinsing chamber (28) has a rinsing area (56) delimited by an anterior ring groove (52) and a rearward closure (54), said rinsing area (56) having a circumferential wall (58) with at least one inlet (60, 60a, 60b) as well as a drainage outlet (62) with an orifice opening (63) for a rinsing medium and the orifice opening (63) is bordering on the most forwardly positioned location (V) of the circumferential wall (58), **characterized in that** the anterior ring groove (52) is aligned at an oblique angle (α) to the longitudinal axis L, that the drainage outlet (62) is directed at a forward angle from the orifice opening (63), and that the circumferential wall (58) has an internal diameter (D) which increases continuously from the rearward end (H) of the rinsing area (56) up to the orifice opening (63).

2. Rinsing device according to claim 1, **characterized in that** the drainage outlet (62) is configured as a straight bore hole in which the bore axis (A) is aligned substantially parallel to the plane (E) of the anterior ring groove (52).

3. Rinsing device according to claim 1 or 2, **characterized by** having an inlet (60b) with an axis (Z") that has a tangentially directed component.

4. Rinsing device according to one of the claims 1 to 3, **characterized by** having an inlet (60a) with an axis (Z') which, in the inflow direction, slants towards the forward side of the rinsing device.

5. Rinsing device according to one of the claims 1 to 4, **characterized by** having a plurality of inlets (60a, 60b) oriented in different directions.

6. Rinsing device according to one of the claims 1 to 5, **characterized in that** the rearward end of the rinsing area (56) comprises a rearward ring groove (54).

## Revendications

1. Dispositif de lavage pour un capteur, comprenant une chambre de lavage (28) cylindrique, qui peut être raccordée par une partie de chambre (50) avant à un contenant de produit de mesure (51) et est conçue pour recevoir un tube plongeur (6) pouvant coulisser sur le même axe que l'axe longitudinal L de la chambre de lavage (28) et un capteur (2) logé dans ce tube, la chambre de lavage (28) présentant une zone de lavage (56) délimitée par une gorge annulaire (52) avant et une partie terminale (54) arrière, zone dont la paroi circonférentielle (58) présente au moins une alimentation (60, 60a, 60b) et une évacuation (62) dotée d'un orifice (63) pour le milieu de lavage et l'orifice (63) étant disposé de façon adjacente à l'emplacement (V) situé le plus en avant de la paroi circonférentielle (58), **caractérisé en ce que** la gorge annulaire (52) avant est orientée dans un angle oblique (α) par rapport à l'axe longitudinal L, **en ce que** l'évacuation (62) est inclinée vers l'avant à partir de l'orifice (63) et **en ce que** la paroi périphérique (58) présente un diamètre intérieur (D) augmentant en continu à partir de l'extrémité (H) arrière de la zone de lavage (56) jusqu'à l'orifice (63).

2. Dispositif de lavage selon la revendication 1, **caractérisé en ce que** l'évacuation (62) est conçue comme perçage rectiligne, dont l'axe de perçage (A) est orienté sensiblement parallèlement au plan (E) de la gorge annulaire (52) avant.

3. Dispositif de lavage selon la revendication 1 ou 2, **caractérisé en ce qu'**il présente une alimentation (60b), dont l'axe (Z") présente un composant dans la direction tangentielle.

4. Dispositif de lavage selon l'une quelconque des revendications 1 à 3, **caractérisé en ce qu'**il présente une alimentation (60a), dont l'axe (Z') est incliné vers l'avant dans le sens d'entrée.

5. Dispositif de lavage selon l'une quelconque des revendications 1 à 4, **caractérisé en ce qu'**il présente une pluralité d'alimentations (60a, 60b) orientées différemment.

6. Dispositif de lavage selon l'une quelconque des revendications 1 à 5, **caractérisé en ce que** la partie terminale arrière de la zone de lavage (56) inclut une gorge annulaire (54) arrière.
